# EUROPEAN PATENT APPLICATION

(11) **EP 4 298 926 A1**
(43) Date of publication of application: **03.01.2024**
(21) Application number: 22864856.4
(22) Date of filing: 11.07.2022
(51) Int. Cl.: A24D 1/00, A24D 1/02, A24B 15/12, A24D 1/04, A24C 5/00, D21H 27/00, D21H 21/52, C08L 1/00, C08L 5/00, C08L 5/06

(54) **SOUND-GENERATING SCENTED SHEET AND SMOKING PRODUCT COMPRISING SAME**

(30) Priority: 06.09.2021 KR 20210118608
(71) Applicant: KT&G Corporation, Daedeok-gu Daejeon 34337 (KR)
(72) Inventor: KIM, Ick Joong, Daejeon 34128 (KR); LEE, Geon Chang, Daejeon 34128 (KR); JUNG, Kyung Bin, Daejeon 34128 (KR); JEOUNG, Eun Mi, Daejeon 34128 (KR); HWANG, Min Hee, Daejeon 34128 (KR)
(74) Representative: Ter Meer Steinmeister & Partner
(86) International application number: PCT/KR2022/010034
(87) International publication number: WO 2023/033347

(57) **Abstract**

A sound-generating flavoring sheet and a smoking article including the same are provided. The smoking article according to some embodiments of the present disclosure may include a smoking material portion, a filter portion, and a wrapper configured to wrap around at least a portion of the smoking material portion. Here, by a porous flavoring sheet that serves as a sound generating element being applied to at least a portion of the smoking material portion or the wrapper, an improved smoking experience can be provided to the smoker.

## Description

### [Technical Field]

The present disclosure relates to a sound-generating flavoring sheet and a smoking article including the same, and more particularly, to a flavoring sheet which adds an auditory effect as well as an olfactory (or gustatory) effect to a smoking article to provide an improved smoking experience, a smoking article including the flavoring sheet, and a method of producing the flavoring sheet and the smoking article.

### [Background Art]

In order to provide an improved smoking experience to a smoker, various studies have been conducted to impart an auditory effect to tobacco products.

In recent years, a cigarette in which granules or capsules are added to a cavity filter and which generates a sound whenever shaken has been proposed. However, the proposed cigarette has disadvantages that, since the sound is generated only when a filter portion is shaken, it is difficult for the sound to be continuously generated during smoking, and the smoker should directly shake the filter portion.

Meanwhile, although not the result of the above studies, kretek cigarettes widely used in Indonesia are products that generate a burning sound during smoking. Kretek cigarettes generate a crackling (or "kretek-kretek") sound as a clove material burns during smoking, and the name "kretek" also derives from this feature. The crackling sound adds an auditory effect during smoking and allows the act of smoking to be perceived as an amusing act, thereby providing an improved smoking experience to the smoker. However, due to the inherent scent of the clove material that may be unpleasant to smokers, the clove material is difficult to universally apply to tobacco products.

### [Disclosure]

### [Technical Problem]

Some embodiments of the present disclosure are directed to providing a flavoring sheet which can add an auditory effect as well as an olfactory (or gustatory) effect to a smoking article and a method of producing the flavoring sheet.

Some embodiments of the present disclosure are also directed to providing a smoking article which can generate a sound during smoking and thus provide an improved smoking experience and a method of producing the smoking article.

Objectives of the present disclosure are not limited to the above-mentioned objectives, and other unmentioned objectives should be clearly understood by those of ordinary skill in the art to which the present disclosure pertains from the description below.

### [Technical Solution]

A smoking article according to some embodiments of the present disclosure for achieving the above objectives may include a smoking material portion, a filter portion, and a wrapper configured to wrap around at least a portion of the smoking material portion, and a porous flavoring sheet that serves as a sound generating element may be applied to at least a portion of the smoking material portion or the wrapper.

In some embodiments, the flavoring sheet may include a hydrocolloid material and an oil-type flavoring.

In some embodiments, the flavoring sheet may include, with respect to a total of 100 parts by weight, 10 to 30 parts by weight of the oil-type flavoring.

In some embodiments, the flavoring sheet may further include a plasticizer.

In some embodiments, the flavoring sheet may further include a bulking agent.

In some embodiments, the flavoring sheet may be added in a cut form to the smoking material portion.

In some embodiments, the flavoring sheet may be disposed on an inner side of the wrapper.

### [Advantageous Effects]

According to some embodiments of the present disclosure, a porous flavoring sheet that serves as a sound generating element in a smoking article can be produced. By adding an auditory effect as well as an olfactory (or gustatory) effect to a smoking article, the produced flavoring sheet can provide an improved smoking experience to the smoker.

Also, by adding a porous flavoring sheet, a smoking article from which a sound is generated during smoking can be easily produced.

The advantageous effects according to the technical spirit of the present disclosure are not limited to those mentioned above, and other unmentioned advantageous effects should be clearly understood by those of ordinary skill in the art from the description below.

### [Description of Drawings]

FIG. 1 is an exemplary view schematically illustrating a smoking article according to some embodiments of the present disclosure.
FIG. 2 is an exemplary view for describing a method of applying a flavoring sheet according to some embodiments of the present disclosure.
FIG. 3 is an exemplary view for describing another method of applying a flavoring sheet according to some embodiments of the present disclosure.
FIGS. 4 and 5 are exemplary views for describing still other methods of applying a flavoring sheet according to some embodiments of the present disclosure.
FIG. 6 is an exemplary view schematically illustrating a smoking article according to some other embodiments of the present disclosure.
FIG. 7 is an exemplary view schematically illustrating a smoking article according to still some other embodiments of the present disclosure.

### [Modes of the Invention]

Hereinafter, exemplary embodiments of the present disclosure will be described in detail with reference to the accompanying drawings. Advantages and features of the present disclosure and methods of achieving the same should become clear from embodiments described in detail below with reference to the accompanying drawings. However, the technical spirit of the present disclosure is not limited to the following embodiments and may be implemented in various different forms. The following embodiments only make the technical spirit of the present disclosure complete and are provided to completely inform those of ordinary skill in the art to which the present disclosure pertains of the scope of the disclosure. The technical spirit of the present disclosure is defined only by the scope of the claims.

In assigning reference numerals to components of each drawing, it should be noted that the same reference numerals are assigned to the same components where possible even when the components are illustrated in different drawings. Also, in describing the present disclosure, when detailed description of a known related configuration or function is deemed as having the possibility of obscuring the gist of the present disclosure, the detailed description thereof will be omitted.

Unless otherwise defined, all terms including technical or scientific terms used in this specification have the same meaning as commonly understood by those of ordinary skill in the art to which the present disclosure pertains. Terms defined in commonly used dictionaries should not be construed in an idealized or overly formal sense unless expressly so defined herein. Terms used in this specification are for describing the embodiments and are not intended to limit the present disclosure. In this specification, a singular expression includes a plural expression unless the context clearly indicates otherwise.

Also, in describing components of the present disclosure, terms such as first, second, A, B, (a), and (b) may be used. Such terms are only used for distinguishing one component from another component, and the essence, order, sequence, or the like of the corresponding component is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises" and/or "comprising" used herein do not preclude the possibility of presence or addition of one or more components, steps, operations, and/or devices other than those mentioned.

First, some terms used in various embodiments of the present disclosure will be clarified.

In the following embodiments, "smoking article" may refer to any product that can be smoked or any product that can provide a smoking experience, regardless of whether the product is based on tobacco, tobacco derivatives, expanded tobacco, reconstituted tobacco, or tobacco substitutes. For example, smoking articles may include products that can be smoked, such as a cigarette, a cigar, and a cigarillo. As another example, smoking articles may include a burning-type smoking article and a heating-type smoking article.

In the following embodiments, "smoking material" may refer to any material that generates smoke and/or aerosol or is used in smoking. For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto.

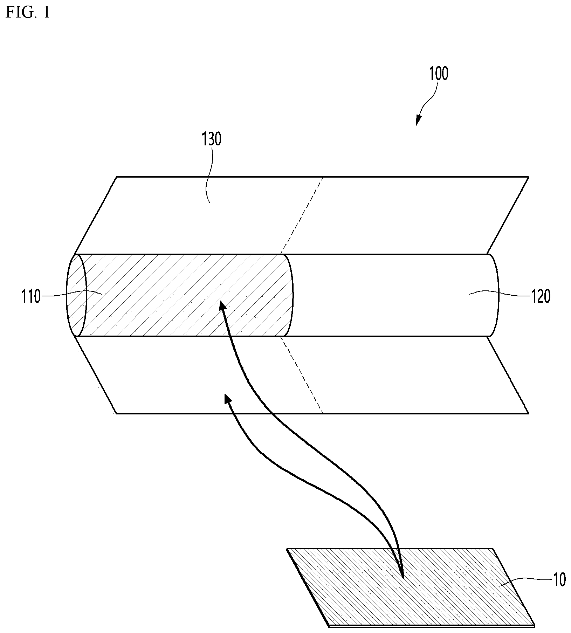

In the following embodiments, "upstream" or "upstream direction" may refer to a direction moving away from an oral region of a smoker, and "downstream" or "downstream direction" may refer to a direction approaching the oral region of the smoker. The terms "upstream" and "downstream" may be used to describe relative positions of components constituting a smoking article. For example, in a smoking article 100 illustrated in FIG. 1, a filter portion 120 is disposed downstream or in a downstream direction of a smoking material portion 110, and the smoking material portion 110 is disposed upstream or in an upstream direction of the filter portion 120.

In the following embodiments, "longitudinal direction" may refer to a direction corresponding to a longitudinal axis of a smoking article.

In the following embodiments, "puff" refers to inhalation by a user (smoker), and the inhalation may be a situation in which a user draws smoke into his or her oral cavity, nasal cavity, or lungs through the mouth or nose.

In the following embodiments, "sheet" may refer to a thin layer component whose width and length are substantially larger than a thickness thereof. The term "sheet" may be interchangeably used with the term "web" or "film" in the art.

In the following embodiments, "flavor sheet" or "flavoring sheet" may refer to a flavoring-containing material that is produced in the form of a sheet.

Hereinafter, various embodiments of the present disclosure will be described in detail.

According to various embodiments of the present disclosure, a flavoring sheet which can add an auditory effect as well as an olfactory (or gustatory) effect to a smoking article can be provided. In other words, a flavoring sheet which can serve as a sound generating element in a smoking article can be provided. The provided flavoring sheet is produced to have porosity and thus can generate a sound when burned (or heated). For example, when the flavoring sheet is burned (or heated), a sound may be generated as pores (or films forming the pores) formed in the flavoring sheet rupture. Furthermore, by, during smoking, slowly releasing a flavoring fixed therein, the provided flavoring sheet can improve flavor expression and flavor persistence of the smoking article.

The flavoring sheet according to embodiments may be produced through a step of producing a sheet composition in a liquid phase (e.g., a slurry form) and a step of drying the produced sheet composition. Here, the liquid phase may not only include a liquid form but also include a form in which a liquid and a solid are mixed (e.g., a slurry form). For example, the flavoring sheet may be produced by casting a sheet composition on a predetermined substrate and drying the sheet composition. However, the present disclosure is not limited thereto, and a specific method of producing the flavoring sheet may be changed.

A specific composition of the sheet composition may be designed to vary.

In some embodiments, the sheet composition may include a solvent such as distilled water and/or ethanol, a hydrocolloid material, and an oil-type flavoring. The flavoring sheet produced from the sheet composition may serve as a sound generating element in the smoking article due to having porosity. For example, a plurality of pores may be formed in the composition as a hydrophilic hydrocolloid material and a lipophilic flavoring are mixed with a solvent, and a porous flavoring sheet may be produced as the sheet composition is dried. Hereinafter, each material constituting the sheet composition will be described.

The solvent such as distilled water or ethanol may be a component for controlling the viscosity of the slurry-type sheet composition.

Next, the hydrocolloid material may be a material for covering and fixing the flavoring and may be a sheet-forming agent for forming a sheet. Examples of the hydrocolloid material may include gelatin, agar, gellan gum, pectin, guar gum, xanthan gum, glucomannan, hydroxypropyl methylcellulose (HPMC), methyl cellulose (MC), ethyl cellulose (EC), carboxymethyl cellulose (CMC), and starch, but the hydrocolloid material is not limited thereto. Since the hydrocolloid material itself becomes sticky when in contact with a solvent (e.g., distilled water, ethanol), the hydrocolloid material can be attached to a wrapper or the like of a smoking article without a separate adhesive. Thus, a process of placing the flavoring sheet can be simplified, and the flavoring sheet may be free from a safety problem due to an adhesive.

In some embodiments, the sheet composition may include modified cellulose among various hydrocolloid materials. Here, "modified cellulose" may refer to cellulose in which a specific functional group is substituted in a molecular structure. Examples of modified cellulose may include HPMC, MC, CMC, and EC, but modified cellulose is not limited thereto. For example, HPMC may have a grade in a range of about 4 to 40000 according to a proportion and molecular weight in which a hydroxypropyl group and a methyl group (or methoxy group) are substituted. The viscosity of modified cellulose may be determined according to the grade. More specifically, physicochemical characteristics of HPMC relate to a proportion of the methoxy group and a proportion and molecular weight of the hydroxypropyl group, and according to The United States Pharmacopeial Convention (USP), types of HPMC may be classified into HPMC1828, HPMC2208, HPMC2906, HPMC2910, and the like according to proportions of the methoxy group and hydroxypropyl group. Here, the first two numbers may refer to a proportion of the methoxy group, and the last two numbers may refer to a proportion of the hydroxypropyl group. As a result of continuous experiments by the inventors of the present disclosure, the flavoring sheet produced from a sheet composition including modified cellulose was confirmed as having excellent physical properties and holding a large amount of flavor.

Next, examples of the oil-type flavoring may include natural oils (e.g., cinnamon, sage, herb, chamomile, kudzu, amacha, clove, lavender, cardamom, clove, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang-ylang, fennel, anise, licorice, St. John's bread, plum extract, peach extract, etc.) extracted from plants, trees, fruits thereof, and the like.

Meanwhile, in some embodiments, the sheet composition may further include low methoxyl pectin (LM-pectin). LM-pectin is a low ester-pectin or low methoxyl pectin in which relatively little esterification is performed. Specifically, LM pectin may be pectin that contains a carboxyl group by less than about 50% in a molecular structure. Due to having a characteristic of not gelating when cooled unlike carrageenan, LM-pectin may lower the viscosity of the slurry-type sheet composition (e.g., to about 600 cp to 800 cp). Further, since the slurry-type sheet composition can be produced without an emulsifier, the sheet composition may be free from a safety problem due to emulsifiers.

LM-pectin may contain a carboxyl group by less than about 50%, less than about 40%, less than about 30%, less than about 20%, or less than about 10% in a molecular structure. The lower the content of carboxyl group in the molecular structure of LM-pectin, the lower the viscosity of a slurry including LM-pectin.

Also, in some embodiments, the sheet composition may further include a bulking agent. The bulking agent may be a material that increases the total mass of components other than distilled water (that is, dry mass) to increase the volume of the flavoring sheet being produced but does not affect the original function of the flavoring sheet. Specifically, the bulking agent may have characteristics of increasing the volume of the flavoring sheet but not adversely affecting the flavor retaining function of the flavoring sheet while not substantially increasing the viscosity of the slurry. Further, the bulking agent may also increase the size of pores by increasing the volume of the flavoring sheet and thus enhance the sound generation function of the flavoring sheet.

The bulking agent may be starch, modified starch, or starch hydrolyzate but is not limited thereto.

Here, modified starch refers to starch acetate, oxidized starch, hydroxypropyl distarch phosphate, hydroxypropyl starch, distarch phosphate, monostarch phosphate, phosphorylated distarch phosphate, or the like.

Also, starch hydrolyzate refers to a material obtained by a process that includes a process of hydrolyzing starch. For example, starch hydrolyzate may include a material obtained by directly hydrolyzing starch (that is, dextrin) or a material obtained by heating and hydrolyzing starch (that is, indigestible dextrin). For example, the bulking agent may be dextrin, more specifically, cyclodextrin.

Generally, starch hydrolyzate may be starch hydrolyzate having a dextrose equivalent (DE) value in a range of about 2 to about 40 or may be starch hydrolyzate having a DE value in a range of about 2 to about 20. For example, as the starch hydrolyzate having a DE value in a range of about 2 to about 20, Pinedex #100 (Matsutani Chemical Industry Co. Ltd), Pinefiber (Matsutani Chemical Industry Co. Ltd), TK-16 (Matsutani Chemical Industry Co. Ltd), or the like may be utilized.

Here, "DE" is an abbreviation of "dextrose equivalent," and the DE value indicates a degree of hydrolysis of starch, that is, a saccharification rate of starch. In the present disclosure, the DE value may be a value measured by the Willstatter-Schudel method. Characteristics of hydrolyzed starch (starch hydrolyzate), for example, characteristics such as a molecular weight of starch hydrolyzate and arrangement of sugar molecules constituting starch hydrolyzate, may not be constant for each molecule of starch hydrolyzate and may be present with a certain distribution or variation. Due to the distribution or variation of the characteristics of starch hydrolyzate or a difference in cut sections, each molecule of starch hydrolyzate may exhibit different physical properties (e.g., DE value). In this way, starch hydrolyzate is a set of molecules exhibiting different physical properties, but a measurement result (that is, DE value) by the Willstatter-Schudel method is considered a representative value indicating the degree of hydrolysis of starch.

Starch hydrolyzate may be selected from the group consisting of dextrin having a DE value in a range of about 2 to about 5, indigestible dextrin having a DE value in a range of about 10 to about 15, and a mixture thereof. For example, as the dextrin having a DE value in a range of about 2 to about 5, Pinedex #100 (Matsutani Chemical Industry Co. Ltd) may be utilized. As the indigestible dextrin having a DE value in a range of about 10 to about 15, Pinefiber (Matsutani Chemical Industry Co. Ltd) may be utilized.

Also, in some embodiments, the sheet composition may further include a plasticizer. The plasticizer may add appropriate flexibility to the flavoring sheet and thus improve the physical property of the sheet. For example, the plasticizer may include at least one of glycerin and propylene glycol but is not limited thereto.

Also, in some embodiments, the sheet composition may further include an emulsifier. The emulsifier may serve as a cross-link between a highly fat-soluble flavoring and a watersoluble hydrocolloid material and increase the amount of flavor held in the flavoring sheet and flavor retention thereof. An example of the emulsifier may include lecithin, but the emulsifier is not limited thereto.

The flavoring sheet produced from the above-described sheet composition may have various content ratios (composition ratios).

In some embodiments, with respect to a total of 100 parts by weight, the flavoring sheet may include about 10 to 30 parts by weight of the oil-type flavoring or may include about 12 to 28 parts by weight or about 14 to 26 parts by weight of the oil-type flavoring. Within such numerical ranges, an appropriate level of flavor expression and sound generating effect can be ensured, and the sheet may be formed well. For example, in a case in which the content of the oil-type flavoring is too low, flavor expression may decrease, and due to pores not being formed well, sound may not be generated well. Conversely, in a case in which the content of the oil-type flavoring is too high, the sheet may not be formed well due to a plurality of pores being generated or the content of sheet-forming agent being reduced.

Also, in some embodiments, the flavoring sheet may include, with respect to a total of 100 parts by weight, about 2 to about 15 parts by weight of moisture, about 25 to about 90 parts by weight of modified cellulose, and about 10 to about 30 parts by weight of the oil-type flavoring.

Also, in some embodiments, the flavoring sheet may include, with respect to a total of 100 parts by weight, about 2 to about 15 parts by weight of moisture, about 1 to about 60 parts by weight of hydrocolloid material, about 1 to about 60 parts by weight of LM-pectin, and about 10 to about 30 parts by weight of the oil-type flavoring.

In some embodiments, with respect to a total of 100 parts by weight of the flavoring sheet, the plasticizer may be included by as much as about 0.1 to about 15 parts by weight. Within such numerical ranges, a sheet having appropriate flexibility can be formed. For example, in a case in which the amount of added plasticizer is too small, flexibility of the sheet may be decreased and thus the flavoring sheet may be easily damaged during processing, and in a case in which the amount of added plasticizer is too large, the sheet may not be formed well.

According to various embodiments of the present disclosure, a smoking article from which a sound is generated during smoking can be provided. Specifically, by the porous flavoring sheet described above being applied to a smoking article, a sound can be generated from the smoking article during smoking, and accordingly, an improved smoking experience can be provided to the smoker. Hereinafter, a smoking article (e.g., 100) according to various embodiments of the present disclosure will be described in detail with reference to the accompanying drawings.

FIG. 1 is an exemplary view schematically illustrating the smoking article 100 according to some embodiments of the present disclosure.

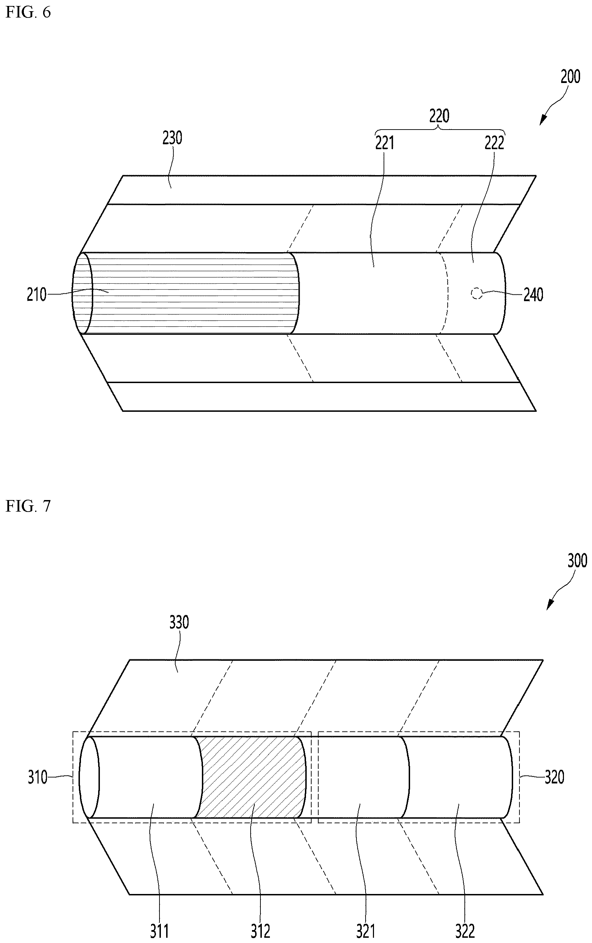

As illustrated in FIG. 1, the smoking article 100 may include the filter portion 120, the smoking material portion 110, and a wrapper 130. However, only the components relating to the embodiment of the present disclosure are illustrated in FIG. 1. Therefore, those of ordinary skill in the art to which the present disclosure pertains should understand that the smoking article 100 may further include general-purpose components other than the components illustrated in FIG. 1. Also, FIG. 1 only illustrates one example of smoking articles according to various embodiments of the present disclosure, and a detailed structure of the smoking article may be changed from that illustrated in FIG. 1. FIGS. 6 and 7 may be referenced for other examples of the detailed structure of the smoking article. Hereinafter, each component of the smoking article 100 will be described.

The filter portion 120 may perform a function of filtering smoke and/or an aerosol generated from the smoking material portion 110. To this end, the filter portion 120 may include a filter material. Examples of the filter material may include a cellulose acetate fiber, paper, etc., but the scope of the present disclosure is not limited thereto. The filter portion 120 may further include the wrapper 130 configured to wrap around the filter material (plug).

The filter portion 120 may be disposed downstream of the smoking material portion 110 and may be connected to a downstream end of the smoking material portion 110. For example, the filter portion 120 and the smoking material portion 110 may have a cylindrical shape (rod shape), may be aligned in the longitudinal axis direction, and may be connected by a tipping wrapper. The tipping wrapper may wrap around at least a portion of the filter portion 120 and at least a portion of the smoking material portion 110 together to connect the filter portion 120 and the smoking material portion 110. In a case in which the filter portion 120 forms a downstream end of the smoking article 100, the filter portion 120 may also serve as a mouthpiece that comes into contact with the oral region of the smoker.

Since the filter portion 120 is produced in the form of a rod, the filter portion 120 may be referred to as a "filter rod 120" in some cases and may be produced in various shapes such as a cylindrical shape, a tubular shape including a hollow therein, and a recessed shape.

Next, the smoking material portion 110 may include a smoking material that can generate smoke and/or an aerosol when burned or heated. The smoking material portion 110 may further include the wrapper 130 configured to wrap around the smoking material.

The smoking material portion 110 may be disposed upstream of the filter portion 120 and may be connected to an upstream end of the filter portion 120. The smoke and/or aerosol generated from the smoking material portion 110 may be delivered to the oral region of the smoker via the filter portion 120 by a puff.

Since the smoking material portion 110 is also produced in the form of a rod, the smoking material portion 110 may be referred to as a "smoking material rod 110" in some cases.

For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto. Also, the tobacco material may have the form of shredded tobacco, tobacco particles, tobacco sheets, tobacco beads, tobacco granules, or tobacco extracts but is not limited thereto.

In some embodiments, the smoking material may further include an additive such as a wetting agent (moisturizer), a flavoring agent, and/or an organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may maintain moisture in the tobacco material at an optimum level and thus soften the inherent flavor and produce a large amount of vapor. Also, for example, the flavoring agent may include licorice, saccharose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cinnamon, ylang-ylang, sage, spearmint, ginger, cilantro, a clove extract (or a clove material), coffee, or the like.

Next, the wrapper 130 may refer to a wrapper that wraps around at least a portion of the smoking material portion 110 and/or the filter portion 120. The wrapper 130 may refer to a separate wrapper of the smoking material portion 110 or the filter portion 120 or may refer to a wrapper, such as a tipping wrapper, that wraps around at least a portion of the smoking material portion 110 and at least a portion of the filter portion 120 together. The wrapper 130 may also collectively refer to all wrappers used in the smoking article 100. The wrapper 130 may be made of porous or nonporous wrapping paper, but the scope of the present disclosure is not limited thereto. For example, the wrapper 130 may be made of a metal foil or have a form in which wrapping paper and a metal foil are laminated with each other.

According to various embodiments of the present disclosure, as illustrated, a flavoring sheet 10 that serves as a sound generating element may be applied to the smoking material portion 110 and/or the wrapper 130. In that way, a sound can be generated during smoking, and an improved smoking experience can be provided to the smoker. However, specific methods of applying the flavoring sheet 10 may vary according to embodiments.

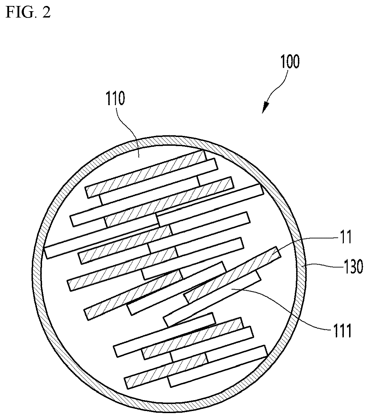

In some embodiments, as illustrated in FIG. 2, cut pieces 11 of the flavoring sheet 10 may be mixed with shredded tobacco 111 (e.g., shredded tobacco leaves, shredded reconstituted tobacco leaves, or the like) and added to the smoking material portion 110. In this case, since the cut pieces 11 are evenly distributed in the smoking material portion 110, a sound of a certain volume can be continuously generated during smoking.

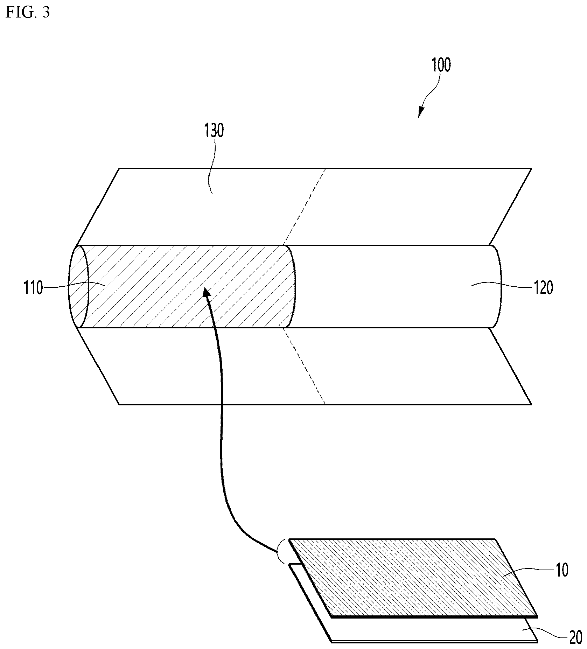

Also, in some embodiments, as illustrated in FIG. 3, the flavoring sheet 10 may be added to the smoking material portion 110 together with a tobacco sheet 20. Here, the tobacco sheet 20 is a tobacco material produced in the form of a sheet and, for example, may be reconstituted tobacco such as reconstituted tobacco leaves but is not limited thereto. In the present example, the flavoring sheet 10 may be appropriately mixed with the tobacco sheet 20 (e.g., the flavoring sheet 10 may be stacked on the tobacco sheet 20, rolled together with the tobacco sheet 20, etc.) and added to the smoking material portion 110.

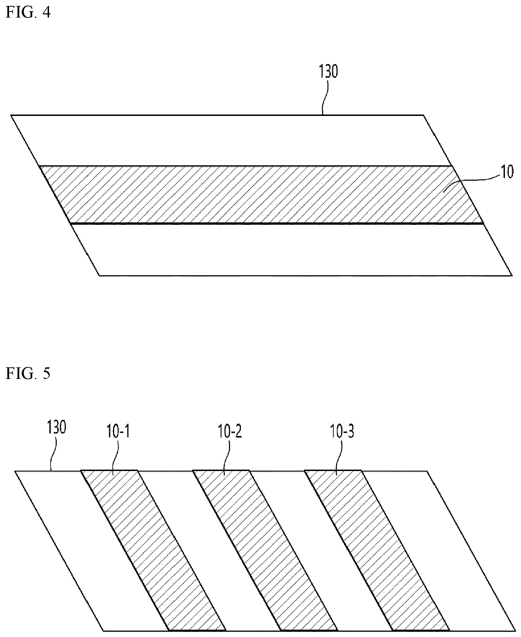

Also, in some embodiments, as illustrated in FIG. 4 or 5, the flavoring sheet 10 may be disposed on (applied to) an inner side of the wrapper 130. For example, as illustrated in FIG. 4, the flavoring sheet 10 may be disposed to extend in a longitudinal direction of the smoking article 100. In this case, a sound of a certain volume can be continuously generated during smoking. As another example as illustrated in FIG. 5, a plurality of flavoring sheets 10-1 to 10-3 may be disposed apart from each other on the inner side of the wrapper 130. Here, the plurality of flavoring sheets 10-1 to 10-3 may be disposed at equal or different intervals. In this case, since a sound may be generated at predetermined time intervals during smoking, a unique smoking experience can be provided to the smoker.

In the previous embodiments, in a case in which at least a portion of the wrapper 130 is made of a metal foil, the flavoring sheet 10 may be disposed on an inner side of the metal foil. In this case, the flavor expression and sound generation of the flavoring sheet 10 can be further promoted by heat transferred through the metal foil.

Methods of placing the flavoring sheet 10 on the wrapper 130 may vary.

In some examples, a wrapping material may be produced through a process of laminating (attaching) the flavoring sheet 10 onto wrapping paper, and the produced wrapping material may be used as the wrapper 130. Here, in a case in which the flavoring sheet 10 includes a hydrocolloid material, the flavoring sheet 10 can be attached to the wrapping paper without a separate adhesive. For example, when a liquid such as water or ethanol is sprayed onto the flavoring sheet 10, the flavoring sheet 10 can be attached to the wrapping paper without an adhesive. This is because the hydrocolloid material itself becomes sticky when in contact with any of the liquids mentioned above. In this case, there is an advantage that the flavoring sheet 10 may be free from a safety problem due to an adhesive.

In some other examples, a wrapping material may be produced through a coating process of applying a sheet composition, which is a raw material of the flavoring sheet 10, on wrapping paper and drying the sheet composition, and the produced wrapping material may be used as the wrapper 130.

Meanwhile, in some examples, the flavoring sheet 10 may constitute at least a portion of the wrapper 130. That is, the flavoring sheet 10 itself may serve as the wrapper 130 of the smoking article 100. Here, at least a portion of the wrapper 130 may only consist of the flavoring sheet 10 or may have a form in which the flavoring sheet 10 and wrapping paper are integrated. In this case, since there is no need to perform a process of placing the flavoring sheet 10 on the wrapper 130 (e.g., a laminating process, a coating process), the process of producing the smoking article 100 can be further simplified.

Meanwhile, in some embodiments of the present disclosure, sound generation patterns during smoking may be controlled by changing the size (e.g., the length, thickness), porosity, arrangement position, arrangement intervals, and/or arrangement form of the flavoring sheet 10.

For example, as illustrated in FIG. 5, by arranging the plurality of flavoring sheets 10-1 to 10-3 apart from each other at predetermined intervals, a sound may be generated at predetermined intervals during smoking.

As another example, by making the size of the flavoring sheet 10 disposed on the wrapper 130 increase or decrease toward a downstream end, a sound may become gradually louder or quieter as smoking is performed. In such a case, it is possible to achieve the effect of notifying the smoker of a smoking end time point through a sound change.

As still another example, by making the porosity of the flavoring sheet 10 disposed on the wrapper 130 increase or decrease toward a downstream end, a sound may become gradually louder or quieter as smoking is performed. Even in this case, it is possible to achieve the effect of notifying the smoker of a smoking end time point through a sound change. In this example, the porosity of the flavoring sheet 10 may be controlled on the basis of, for example, the content of the oil-type flavoring, the content of the bulking agent, drying conditions, and the like but is not limited thereto.

As yet another example, by making the arrangement interval of the flavoring sheet 10 widen or narrow toward a downstream end, sound generation time intervals may increase or decrease as smoking is performed.

The smoking article 100 according to some embodiments of the present disclosure has been described above with reference to FIGS. 1 to 5. According to the above description, by applying the porous flavoring sheet 10, the smoking article 100 from which a sound is generated during smoking can be easily produced, and an improved smoking experience can be provided to the smoker.

Hereinafter, smoking articles 200 and 300 according to some other embodiments of the present disclosure will be described with reference to FIGS. 6 and 7. However, for clarity of the present disclosure, description of contents overlapping with the smoking article 100 described above will be omitted.

FIG. 6 is an exemplary view illustrating a smoking article 200 according to some other embodiments of the present disclosure.

As illustrated in FIG. 6, the smoking article 200 may include a smoking material portion 210 and a filter portion 220, and the filter portion 220 may include a plurality of segments 221 and 222.

The smoking material portion 210 may correspond to the smoking material portion 110 described above. Therefore, description thereof will be omitted.

Next, the filter portion 220 may be made of a first segment 221 and a second segment 222. Of course, the filter portion 220 may further include a third segment (not illustrated).

The first segment 221 may perform a function of cooling smoke and/or an aerosol generated from the smoking material portion 210. Therefore, the first segment 221 may be referred to as a "cooling segment 221" or a "cooling portion 221" in some cases.

The first segment 221 may be produced in various forms. As an example, the first segment 221 may be a cylindrical paper tube that is made of a paper material and includes a hollow formed therein. As another example, the first segment 221 may be produced using a polymer material or a biodegradable polymer material. For example, the first segment 221 may be produced using a polylactic acid (PLA) fiber but is not limited thereto. As still another example, the first segment 221 may be produced as a cellulose acetate filter having a plurality of holes formed therein. As yet another example, the first segment 221 may be a tubular filter including a hollow formed therein. For example, the first segment 221 may be a cellulose acetate filter including a hollow formed therein. However, the first segment 221 is not limited thereto and may be produced in any other form as long as the first segment 221 can perform a cooling function.

Next, the second segment 222 may perform a function of filtering smoke and/or an aerosol that passed through the first segment 221. Therefore, the second segment 222 may be referred to as a "filter segment 222" or a "filter portion 222" in some cases. Alternatively, due to being positioned at a mouthpiece portion, the second segment 222 may be referred to as a "mouthpiece segment 222" or a "mouthpiece portion 222."

In some embodiments, the second segment 222 may include at least one capsule 240. Here, the capsule 240 may perform a function of producing a flavor or perform a function of generating an aerosol. For example, the capsule 240 may have a structure in which a liquid including a flavoring is wrapped by a film. Also, the capsule 240 may have a spherical or cylindrical shape, but the shape of the capsule 240 is not limited thereto.

Next, a wrapper 230 may correspond to the wrapper 130 described above. Therefore, a description thereof will be omitted.

As mentioned above, the porous flavoring sheet 10 that serves as a sound generating element may be applied to the smoking material portion 210 and/or the wrapper 230. In that way, flavor expression and flavor persistence of the smoking article 200 can be enhanced, and due to a sound being generated during smoking, an improved smoking experience can be provided to the smoker.

Meanwhile, although not illustrated in FIG. 6, the smoking article 200 may further include a plug (not illustrated) disposed at an end. For example, the plug may be disposed at an upstream end of the smoking article 200 and perform a function of appropriately controlling the overall length of the smoking article 200. Also, in a case in which the smoking article 200 is inserted into an aerosol generation device (not illustrated), the plug may perform a function of controlling the smoking material portion 210 to be disposed at an appropriate position inside the aerosol generation device.

FIG. 7 is an exemplary view schematically illustrating a smoking article 300 according to still some other embodiments of the present disclosure.

As illustrated in FIG. 7, the smoking article 300 may include a smoking material portion 310 and a filter portion 320, the smoking material portion 310 may include a plurality of segments 311 and 312, and the filter portion 320 may include a plurality of segments 321 and 322.

As illustrated, the smoking material portion 310 may be made of a first segment 311 and a second segment 312. Of course, the smoking material portion 310 may further include a third segment (not illustrated).

The first segment 311 may include a moisturizer. For example, the first segment 311 may include crimped paper impregnated with a moisturizer. For example, the moisturizer may include at least one of glycerin, propylene glycol, ethylene glycol, dipropylene glycol, diethylene glycol, triethylene glycol, tetraethylene glycol, and oleyl alcohol.

Next, the second segment 312 may include a nicotine-generating substrate such as a tobacco material. For example, the nicotine-generating substrate may include shredded tobacco, tobacco particles, tobacco sheets, tobacco beads, and tobacco granules. As another example, the nicotine-generating substrate may include crimped paper impregnated with a tobacco extract. When the nicotine-generating substrate is heated, nicotine may be generated from the nicotine-generating substrate and transferred to the filter portion 320.

Next, the filter portion 320 may include the plurality of segments 321 and 322. For example, the filter portion 320 may include a third segment 321 configured to perform a cooling function and a fourth segment 322 configured to perform a filtering function. The contents described above in relation to the filter portion 220 of FIG. 6 may identically apply to the filter portion 320, and thus further description thereof will be omitted.

Next, a wrapper 330 may correspond to the wrapper 130 described above. Therefore, description thereof will be omitted.

As mentioned above, the flavoring sheet 10 that serves as a sound generating element may be applied to the smoking material portion 310 and/or the wrapper 330. In that way, flavor expression and flavor persistence of the smoking article 300 can be enhanced, and due to a sound being generated during smoking, an improved smoking experience can be provided to the smoker.

The smoking articles 200 and 300 according to some other embodiments of the present disclosure have been described above with reference to FIGS. 6 and 7.

Hereinafter, the configurations and effects of the flavoring sheet 10 described above will be further clarified using examples and comparative examples. However, the following examples are only some examples of the present disclosure, and thus the scope of the present disclosure is not limited by the following examples.

Examples 1 and 2
By applying sheet compositions, which have compositions disclosed as compositions of sheet-producing liquids in Table 1 below, on a substrate and drying the sheet compositions, flavoring sheets having compositions disclosed as compositions of complete products in Table 1 below were produced.

**[Table 1]**

| Composition (wt%) | Example 1 | | Example 2 | |
|---|---|---|---|---|
| | Sheet-producing liquid | Complete product | Sheet-producing liquid | Complete product |
| HPMC | - | - | - | - |
| MC | 7 | 34.8 | - | - |
| Agar | - | - | 2 | 10.1 |
| Pectin | - | - | 3 | 15.2 |
| Dextrin | 7 | 34.8 | 5 | 25.3 |
| Water | 73 | 8.0 | 82 | 8.9 |
| Ethyl alcohol | 8.5 | - | - | - |
| Glycerin | 1.5 | 7.5 | 3 | 15.2 |
| Peppermint oil | - | - | 5 | 25.3 |
| Clove oil | 3 | 14.9 | - | - |
| Total | 100 | 100 | 100 | 100 |

### Comparative Examples 1 to 3

By applying sheet compositions, which have compositions disclosed as compositions of sheet-producing liquids in Table 2 below, on a substrate and drying the sheet compositions, flavoring sheets having compositions disclosed as compositions of complete products in Table 2 below were produced.

**[Table 2]**

| Composition (wt%) | Comparative Example 1 | | Comparative Example 2 | | Comparative Example 3 | |
|---|---|---|---|---|---|---|
| | Sheet-producing liquid | Complete product | Sheet-producing liquid | Complete product | Sheet-producing liquid | Complete product |
| HPMC | 7 | 39.0 | - | - | 7 | 40.2 |
| MC | - | - | - | - | - | - |
| Agar | - | - | 2 | 8.6 | - | - |
| Pectin | - | - | 3 | 12.9 | - | - |
| Dextrin | 7 | 39.0 | 5 | 21.6 | 7 | 40.2 |
| Water | 75 | 8.0 | 79 | 9.4 | 75 | 8.0 |
| Ethyl alcohol | 8.5 | - | - | - | 9 | - |
| Glycerin | 2 | 11.2 | 3 | 12.9 | 2 | 11.5 |
| Peppermint oil | 0.5 | 2.8 | - | - | - | - |
| Clove oil | - | - | 8 | 34.5 | - | - |
| Total | 100 | 100 | 100 | 100 | 100 | 100 |

### Experimental Example: Evaluation of workability of producing flavoring sheet, quality of flavoring sheet, and degree of sound generation of flavoring sheet according to content of oil-type flavoring

For the flavoring sheets according to Examples 1 and 2 and Comparative Examples 1 to 3, an experiment was conducted to evaluate workability (ease) of producing a flavoring sheet by applying a sheet composition (sheet-producing liquid) on a substrate and drying the sheet composition (sheet-producing liquid), the quality of the produced flavoring sheet, and whether a sound is generated therefrom.

Here, for the quality of the flavoring sheet, whether a degree of formation of pores in the flavoring sheet and a degree of flexibility thereof are suitable for use was evaluated. Experimental results are shown in Table 3 below.

"O" indicates a case in which workability of producing the flavoring sheet was excellent, a case in which the quality of the flavoring sheet was suitable for use, or a case in which a sound was generated, and conversely, "X" indicates a case in which the workability was low, a case in which the quality was not suitable for use, or a case in which a sound was not generated.

**[Table 3]**

| Classification | Workability of producing sheet | Quality of sheet | Sound generation |
|---|---|---|---|
| Example 1 | O | O | O |
| Example 2 | O | O | O |
| Comparative Example 1 | O | O | X |
| Comparative Example 2 | X | X | X |
| Comparative Example 3 | O | O | X |

Referring to Table 3, it was confirmed that the workability of producing the sheet, the quality of the sheet, and the degree of sound generation were all excellent in Examples 1 and 2 in which the oil-type flavorings were included at 14.9 wt% and 25.3 wt%, respectively.

On the other hand, it was confirmed that a sound was not generated in Comparative Example 1 in which the oil-type flavorings were included at 2.8 wt% and Comparative Example 3 in which the oil-type flavorings were not included, and it was confirmed that the workability of producing the sheet was low, the quality of the sheet was not suitable for use, and a sound was not generated in Comparative Example 2 in which the oil-type flavorings were included at 34.5 wt%. Such results are determined as showing that adding the oil-type flavoring at an appropriate amount can improve the workability of producing the flavoring sheet and physical properties of the flavoring sheet and can also improve sound generation.

The configurations and effects of the flavoring sheet 10 have been described more clearly above using the examples and the comparative examples.

The embodiments of the present disclosure have been described above with reference to the accompanying drawings, but those of ordinary skill in the art to which the present disclosure pertains should understand that the present disclosure may be embodied in other specific forms without changing the technical spirit or essential features thereof. Therefore, the embodiments described above should be understood as being illustrative, instead of limiting, in all aspects. The scope of the present disclosure should be interpreted according to the claims below, and any technical spirit within the scope equivalent to the claims should be interpreted as falling within the scope of the technical spirit defined by the present disclosure.

## Claims

1. A smoking article comprising:
a smoking material portion;
a filter portion; and
a wrapper configured to wrap around at least a portion of the smoking material portion,
wherein a porous flavoring sheet that serves as a sound generating element is applied to at least a portion of the smoking material portion or the wrapper.

2. The smoking article of claim 1, wherein the flavoring sheet includes a hydrocolloid material and an oil-type flavoring.

3. The smoking article of claim 2, wherein the flavoring sheet includes, with respect to a total of 100 parts by weight, 10 to 30 parts by weight of the oil-type flavoring.

4. The smoking article of claim 2, wherein the flavoring sheet further includes a plasticizer.

5. The smoking article of claim 2, wherein the flavoring sheet further includes a bulking agent.

6. The smoking article of claim 1, wherein the flavoring sheet is added in a cut form to the smoking material portion.

7. The smoking article of claim 1, wherein the flavoring sheet is disposed on an inner side of the wrapper.

8. The smoking article of claim 7, wherein:
the flavoring sheet includes a plurality of sheets; and
the plurality of sheets are disposed apart from each other on the inner side of the wrapper.

9. The smoking article of claim 7, wherein:
the flavoring sheet includes a plurality of sheets; and
sizes of the plurality of sheets gradually increase or decrease toward a downstream end.

10. The smoking article of claim 7, wherein:
the flavoring sheet includes a plurality of sheets; and
porosities of the plurality of sheets gradually increase or decrease toward a downstream end.
